# EUROPÄISCHE PATENTANMELDUNG

(11) **EP 1 724 655 A2**
(43) Veröffentlichungstag der Anmeldung: **22.11.2006**
(21) Anmeldenummer: 06009799.5
(22) Anmeldetag: 12.05.2006
(51) Int. Cl.: G05D 23/19

(54) **Verfahren zum Betrieb einer Regelung für eine Heizungsanlage**

(30) Priorität: 21.05.2005 DE 102005023526
(71) Anmelder: ROBERT BOSCH GMBH, 70442 Stuttgart (DE)
(72) Erfinder: Briegel, Klaus-Dieter, 35447 Reiskirchen (DE); Ramlow, Steffen, 35096 Oberweimar (DE); Weber, Sven, 35274 Kirchhain (DE)

(57) **Zusammenfassung**

Die Erfindung betrifft ein Verfahren zum Betrieb einer Regelung für eine Heizungsanlage mit einem dem Heizgerät direkt zugeordneten Regelgerät sowie mindestens einem Fernbedienungsgerät, einer Schaltuhr und/oder einem Raumthermostaten in einem zu beheizenden Raum, insbesondere an einer vom Regelgerät entfernten Position. Die Signalübertragung zur Kommunikation mit dem Regelgerät erfolgt per Funk, wobei die Funksignale in festgelegten Zeitabständen gesendet werden.

Mit der Erfindung sollen Installation und Inbetriebnahme einer Regelung für eine Heizungsanlage vereinfacht sowie die erforderliche Signalübertragung per Funk verbessert werden.

Erfindungsgemäß ist dieses Verfahren dadurch gekennzeichnet, dass im Fernbedienungsgerät, in der Schaltuhr und/oder dem Raumthermostaten eine Anzeigevorrichtung für aktuell gemessene Werte der Empfangsfeldstärke vorgesehen ist, welche bei der Installation zu aktivieren ist. Dabei werden sowohl die Empfangsfeldstärke von Fernbedienungsgerät, Schaltuhr und/oder Raumthermostat sowie wahlweise auch von dem einem Heizgerät zugeordneten Regelgerät angezeigt. Eine empfangsgünstige Montageposition kann somit schnell gefunden werden.

## Beschreibung

Die Erfindung betrifft ein Verfahren zum Betrieb einer Regelung für eine Heizungsanlage nach dem Oberbegriff des Patentanspruches 1.
Üblicherweise ist an das einem Heizgerät direkt zugeordnete Regelgerät bei einer Heizungsanlage ein Fernbedienungsgerät, eine Schaltuhr und/oder ein Raumthermostat angeschlossen, um den Nutzern eines Gebäudes die Bedienung der Heizungsanlage von einem Raum aus zu ermöglichen. Für einen vollautomatischen Betrieb von bekannten Heizungsanlagen sind außerdem diverse Messwerte erforderlich, nach denen die erzeugte Wärmeleistung und/oder die in die Räume eingebrachte Wärmeenergie geregelt wird. Neben der Außentemperatur gehört dazu auch die Raumtemperatur, denn diese ist maßgebend für die Rückmeldung zur Regelung der Heizungsanlage, insbesondere in Bezug auf die tatsächlichen Verhältnisse gegenüber den vom Nutzer eingestellten Sollwerten für einen Raum bzw. für die gesamte Nutzungseinheit.
Da sich das Fernbedienungsgerät, die Schaltuhr und/oder ein Raumthermostat in einem Raum in der Regel an einer vom zentralen Regelgerät entfernten Position befinden, kennt man einerseits die Kommunikation mit dem Regelgerät über eine Zweidrahtleitung und andererseits die Signalübertragung per Funk. Dies hat den Vorteil, dass die Leitungsverbindung entfällt. Gleichzeitig wird dabei auch aus praktischen Gründen vermieden, die Bedieneinrichtung im Raum an das Stromnetz anzuschließen, so dass die Stromversorgung mit mindestens einer Batterie üblich ist.
Wichtig für eine sichere Signalübertragung per Funk ist das Montieren von Sender und Empfänger an empfangsgünstigen Stellen. Dabei ist die Position des einem Heizgerät direkt zugeordneten Regelgerätes festgelegt, aber bei einem Fernbedienungsgerät, einer Schaltuhr und/oder einem Raumthermostat können schon kleinste Abweichungen von der ursprünglich geplanten Montageposition deutliche Auswirkungen auf einen guten Empfang der Funksignale haben. Begründet ist dies im Wesentlichen mit lokalen Störeinflüssen, beispielsweise durch andere Funksignale, elektrische Haushaltsgeräte, oder magnetische Felder aus der Elektroinstallation.

Wegen dieser Problematik muss ein Handwerker bisher beim Installieren von Bedieneinheiten der Heizungsanlage in Wohn- bzw. Nutzräumen sehr sorgfältig die Montageposition prüfen. Möglicherweise zeigt sich aber erst nach dem Abschluss der Montage und der Inbetriebnahme der Heizungsregelung, dass Störeinflüsse die Empfangsqualität negativ beeinflussen. Um eine stärkere Empfangsfeldstärke sicherzustellen, muss die Bedieneinheit an einer anderen Position montiert werden, und eventuell sind dann Schäden an der Wand zu beseitigen. Dieses Verfahren ist mit einem relativ hohen Aufwand für das Montagepersonal verbunden.

Der Erfindung liegt daher die Aufgabe zu Grunde, die Installation und die Inbetriebnahme einer Regelung für eine Heizungsanlage zu vereinfachen sowie die erforderliche Signalübertragung per Funk zu verbessern.

Erfindungsgemäß wurde dies mit den Merkmalen des Patentanspruches 1 gelöst. Vorteilhafte Weiterbildungen sind den Unteransprüchen zu entnehmen.
Das Verfahren zum Betrieb einer Regelung für eine Heizungsanlage ist dadurch gekennzeichnet, dass im Fernbedienungsgerät, in der Schaltuhr und/oder dem Raumthermostaten eine Anzeigevorrichtung für aktuell gemessene Werte der Empfangsfeldstärke vorgesehen ist, welche bei der Installation zu aktivieren ist. Angezeigt wird dabei einerseits die Empfangsfeldstärke von Fernbedienungsgerät, Schaltuhr und/oder Raumthermostat sowie wahlweise auch andererseits die des Regelgerätes am Heizgerät.
Die Aktivierung der Anzeige für die Empfangsfeldstärke am Fernbedienungsgerät, an einer Schaltuhr und/oder an einem Raumthermostaten kann manuell und/oder automatisch, zum Beispiel beim Herstellen der Stromversorgung durch das Einlegen der Batterie, erfolgen. Solange die Anzeige der Empfangsfeldstärke aktiviert ist, werden die Funkimpulse zur Signalübertragung in kürzeren Zeitabständen, etwa alle drei Sekunden, gesendet. Dagegen liegt dieses Intervall im normalen Betrieb bei etwa einer Minute, auch um wegen der begrenzten Batteriekapazität Strom zu sparen. Daher wird die Anzeige der Empfangsfeldstärke nach einer vorgegebenen oder einstellbaren Zeitdauer und/oder beim Verlassen eines Installationsmodus am Regelgerät, am Fernbedienungsgerät, an der Schaltuhr oder am Raumthermostaten wieder deaktiviert.

Vorzugsweise erfolgt das Anzeigen der Empfangsfeldstärke für Fernbedienungsgerät, Schaltuhr und/oder Raumthermostat sowie das Regelgerät am Heizgerät als Basisstation nebeneinander in einem Display. Dies ist besonders übersichtlich. In einer bevorzugten Ausführungsform wird die Empfangsfeldstärke jeweils über Zahlenwerte von 0 bis 9 oder jeweils mit einem aus Einzelstrichen zusammengesetzten Balken signalisiert.
Alternativ dazu kann auch nur ein Wert oder ein Signal für die empfangsgünstigste Montageposition von Fernbedienungsgerät, Schaltuhr und/oder Raumthermostat angezeigt werden. Dieser Wert wird dann aus mehreren gemessenen Werten, also mindestens für das Regelgerät am Heizgerät als Basisstation und die betreffende Bedieneinheit im Wohn- bzw. Nutzraum, ermittelt.
Mit dem erfindungsgemäßen Verfahren werden Installation und Inbetriebnahme einer Regelung für eine Heizungsanlage vereinfacht sowie die funktionswichtige Signalübertragung per Funk optimal auf die jeweiligen Anlagen- und Gebäudeverhältnisse abgestimmt. Für Fernbedienungsgerät, Schaltuhr und/oder Raumthermostat wird auf einfache, anschauliche Art und Weise eine geeignete, empfangsgünstige Stelle ermittelt, indem zunächst die Anzeige für die Empfangsfeldstärke aktiviert wird. Dann lässt sich durch Probieren und
Anhalten an möglichen Positionen die endgültige, empfangsgünstigste Montageposition herausfinden. Nach dem Abschluss der Installation kehrt die Anzeige in den Modus für den Normalbetrieb zurück. So wird ein Handwerker beim Installieren von Bedieneinheiten der Heizungsanlage in Wohn- bzw. Nutzräumen entlastet. Zudem sind Montagefehler und Korrekturen wegen Störeinflüssen auf die Empfangsqualität nach der Inbetriebnahme der Heizungsregelung praktisch ausgeschlossen.

## Patentansprüche

1. Verfahren zum Betrieb einer Regelung für eine Heizungsanlage mit einem dem Heizgerät direkt zugeordneten Regelgerät sowie mindestens einem Fernbedienungsgerät, einer Schaltuhr und/oder einem Raumthermostaten in einem zu beheizenden Raum, insbesondere an einer vom Regelgerät entfernten Position, einer Signalübertragung per Funk zur Kommunikation mit dem Regelgerät und mit einer eigenen Stromversorgung, wobei die Funksignale in festgelegten Zeitabständen gesendet werden,
**dadurch gekennzeichnet, dass** im Fernbedienungsgerät, in der Schaltuhr und/oder dem Raumthermostaten eine Anzeigevorrichtung für aktuell gemessene Werte der Empfangsfeldstärke vorgesehen ist, welche bei der Installation zu aktivieren ist.

2. Verfahren nach Anspruch 1,
**dadurch gekennzeichnet, dass** die Empfangsfeldstärke von Fernbedienungsgerät, Schaltuhr und/oder Raumthermostat sowie wahlweise auch von dem einem Heizgerät zugeordneten Regelgerät angezeigt werden.

3. Verfahren nach Anspruch 1 oder 2,
**dadurch gekennzeichnet, dass** die Aktivierung der Anzeige für die Empfangsfeldstärke am Fernbedienungsgerät, an einer Schaltuhr und/oder an einem Raumthermostaten manuell und/oder automatisch, beim Herstellen der Stromversorgung, erfolgt.

4. Verfahren nach einem der Ansprüche 1 bis 3,
**dadurch gekennzeichnet, dass** während der Aktivierung der Anzeige der Empfangsfeldstärke die Funkimpulse zur Signalübertragung in kürzeren Zeitabständen, etwa alle drei Sekunden, gesendet werden als im normalen Betrieb, mit Zeitabständen von etwa einer Minute.

5. Verfahren nach einem der Ansprüche 1 bis 4,
**dadurch gekennzeichnet, dass** die Anzeige der Empfangsfeldstärke nach einer vorgegebenen oder einstellbaren Zeitdauer und/oder beim Verlassen eines Installationsmodus am Regelgerät, am Fernbedienungsgerät, an der Schaltuhr oder am Raumthermostaten wieder deaktiviert wird.

6. Verfahren nach einem der Ansprüche 1 bis 5,
**dadurch gekennzeichnet, dass** die Anzeige der Empfangsfeldstärke für Fernbedienungsgerät, Schaltuhr und/oder Raumthermostat sowie das Regelgerät am Heizgerät nebeneinander, insbesondere jeweils über Zahlenwerte von 0 bis 9 oder jeweils mit einem aus Einzelstrichen zusammengesetzten Balken, erfolgt.

7. Verfahren nach einem der Ansprüche 1 bis 6,
**dadurch gekennzeichnet, dass** nur ein Wert oder ein Signal für die empfangsgünstigste Montageposition von Fernbedienungsgerät, Schaltuhr und/oder Raumthermostat angezeigt wird, wobei dieser Wert aus mehreren gemessenen Werten ermittelt wird.
